# FASCICULE DE BREVET EUROPEEN

(11) **EP 0 711 941 B1**
(45) Date de publication et mention de la délivrance du brevet: **07.06.2000**
(21) Numéro de dépôt: 95402480.8
(22) Date de dépôt: 07.11.1995
(51) Int. Cl.: F16K 5/08

(54) **Manette à butée escamotable pour la robinetterie du dispositif de remplissage d'une chaudière à gaz**
Handgriff mit einsteckbarem Anschlag für einen Füllhahn an einem Gasheizkessel
Hand lever with insertable stop for a filling cock on a gas heating boiler

(30) Priorité: 10.11.1994 FR 9413567
(43) Date de publication de la demande: 15.05.1996
(73) Titulaire: SAUNIER DUVAL EAU CHAUDE CHAUFFAGE S.D.E.C.C. - Société anonyme, F-94120 Fontenay sous Bois (FR)
(72) Inventeur: Helias, Luc, F-44300 Nantes (FR)
(74) Mandataire: Lhuillier, René

(56) Documents cités:
- CH-A- 178 675
- DE-U- 1 697 754
- FR-A- 1 077 909
- US-A- 1 628 263

## Description

L'invention se rapporte aux robinetteries intégrées dans le dispositif de remplissage des chaudières à gaz et concerne plus précisément une nouvelle manette d'actionnement à butée escamotable.

Les robinetteries actuelles intégrées dans les chaudières à gaz et comportant un disconnecteur destiné au remplissage des installations, sont équipées de manettes pivotantes d'actionnement en matière plastique, qui sont simplement guidées sur la tige de commande de leur organe obturateur par deux méplats et sont montées à force sans fixation. Il est bien connu que pour ouvrir la vanne en faisant pivoter l'organe obturateur il faut actionner la manette pour l'amener dans l'axe de la canalisation et pour refermer la vanne il faut la faire tourner de 90° pour qu'elle soit perpendiculaire à l'axe de la canalisation.

Pour assurer le remplissage en eau de l'installation ou encore pour rajouter de l'eau dans l'installation il faut placer la manette dans une position intermédiaire à 45° des positions d'ouverture et de fermeture. Mais cette manoeuvre pose un problème aux usagers qui ne peuvent identifier facilement, ni physiquement, ni visuellement la position exacte de la manette, faute de disposer d'une butée franche permettant son repérage. En effet dans les chaudières murales ces robinetteries sont généralement placées sous l'appareil, à proximité du mur, l'appareil étant lui-même souvent placé dans un coin peu accessible et mal éclairé.

La Demanderesse s'est donc attachée à mettre au point une nouvelle manette d'actionnement permettant une identification nette de sa position à l'aide d'une butée franche qui est escamotable de façon à pouvoir dépasser cette position intermédiaire et atteindre la position de fermeture.

L'invention a donc pour objet une manette à butée escamotable pour la robinetterie du dispositif de remplissage d'une chaudière à gaz comportant un levier d'actionnement d'une couronne coopérant avec l'axe de commande de l'organe obturateur du robinet, manette dans laquelle ladite couronne est creusée d'une échancrure qui définit la limite angulaire de pivotement de la manette vis-à-vis d'une butée fixe solidaire du corps de robinet, un clip escamotable se plaçant dans ladite échancrure pour limiter le débattement possible de la butée fixe et la course de la manette.

Selon une caractéristique particulière de l'invention, le clip est une lamelle allongée découpée en forme de fourche dont les branches sont profilées intérieurement pour ménager sur chacune des arrondis, et du côté opposé, la lamelle fait retour vers le haut et forme un rebord horizontal. Les branches du clip pénètrent dans des fentes prévues sur la couronne et enserrent l'axe de commande de l'organe obturateur par l'un des arrondis, tandis que le rebord horizontal fait retour au-dessus de l'échancrure.

D'autres caractéristiques et avantages ressortiront de la description qui va suivre d'un exemple de réalisation dans lequel il est fait référence aux dessins annexés qui représentent :

Figure 1 une vue générale en perspective d'une robinetterie de chaudière équipée de deux manettes.

Figure 2 une vue des manettes gauche et droite de la figure 1.

Figures 3 et 4 des vues respectivement en perspective et en plan du clip.

Figure 5 une vue de la robinetterie selon la figure 1, les manettes étant en position de remplissage à 45°.

Figure 6 une vue identique à celle de la figure 5 mais avec les clips sortis.

Figure 7 une vue de la robinetterie selon la figure 1, les manettes étant en position de fermeture à 90°.

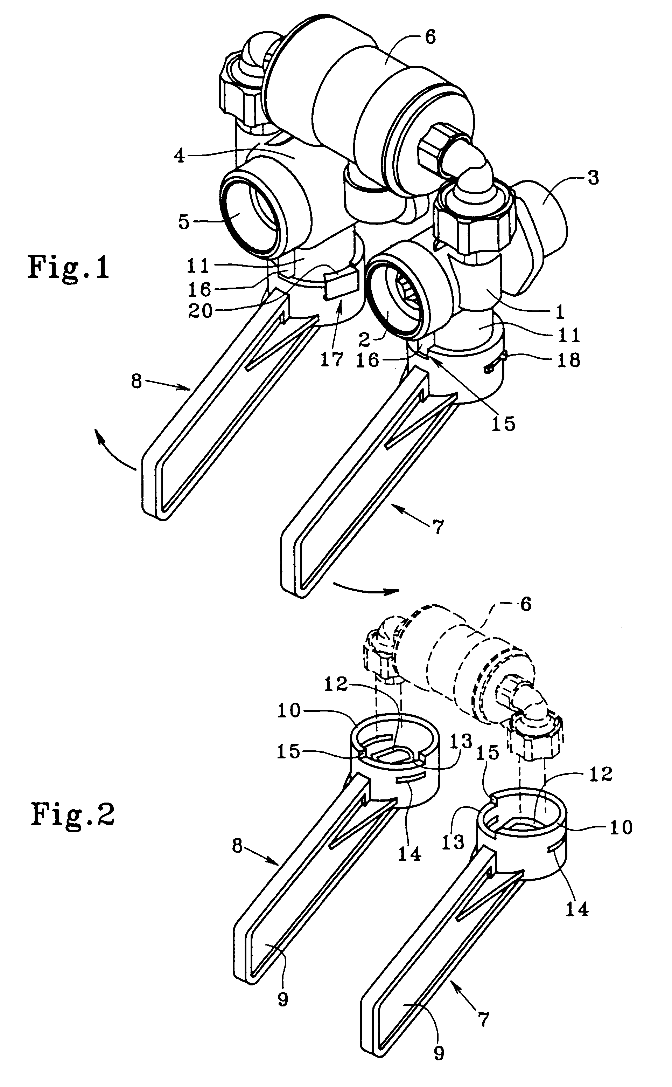

On a représenté à la figure 1 une robinetterie de chaudière dans laquelle on remarque un premier corps de robinet 1 recevant un conduit 2 d'arrivée d'eau froide sanitaire et un conduit d'alimentation 3 vers l'appareil, de même qu'un second corps de robinet 4 intégré dans un conduit 5 de retour d'eau du circuit de chauffage. Les corps de robinet 1 et 4 communiquent par un disconnecteur 6 équipé d'un clapet anti-retour non représenté. Ils disposent chacun d'une manette d'actionnement respectivement une manette 7 pour l'eau froide et une manette 8 pour l'eau chaude. Dans la position représentée sur la figure chacune d'entre elles est dans le prolongement des corps de robinet ce qui correspond à la pleine ouverture des circuits, les sphères obturatrices internes aux robinets étant maintenues ouvertes par leur axe de commande solidaire de la manette. La manette 7 est manoeuvrable vers la droite (sur la figure 1) et la manette 8 vers la gauche.

La figure 2 illustre clairement la structure de la manette 7 à droite et de la manette 8 à gauche, les deux étant symétriques. Le levier 9 de chaque manette se termine par une couronne 10 qui est engagée sur un pivot 11 du corps de robinet correspondant (figure 1). La couronne dispose intérieurement d'un guide 12 à méplats destiné à recevoir l'axe de commande de la sphère obturatrice. La bordure supérieure de la couronne est creusée d'une échancrure 13 s'étendant sur un quart de sa circonférence, soit un secteur de 90°. Cette échancrure définit la limite angulaire de pivotement de la manette vis-à-vis d'une butée fixe 16 solidaire du corps de robinet. La couronne est également percée de deux fentes horizontales 14 diamétralement opposées.

En se référant à nouveau à la figure 1, on voit que les extrémités des échancrures 13 forment des épaulements 15 qui viennent en appui contre la butée fixe 16. Du fait de cette butée et des épaulements, la course de chaque manette est limitée à cette plage de 90° correspondant à l'échancrure. On notera que les échancrures de chaque couronne sont orientées l'une face à l'autre, imposant ainsi la manoeuvre des manettes en sens opposés.

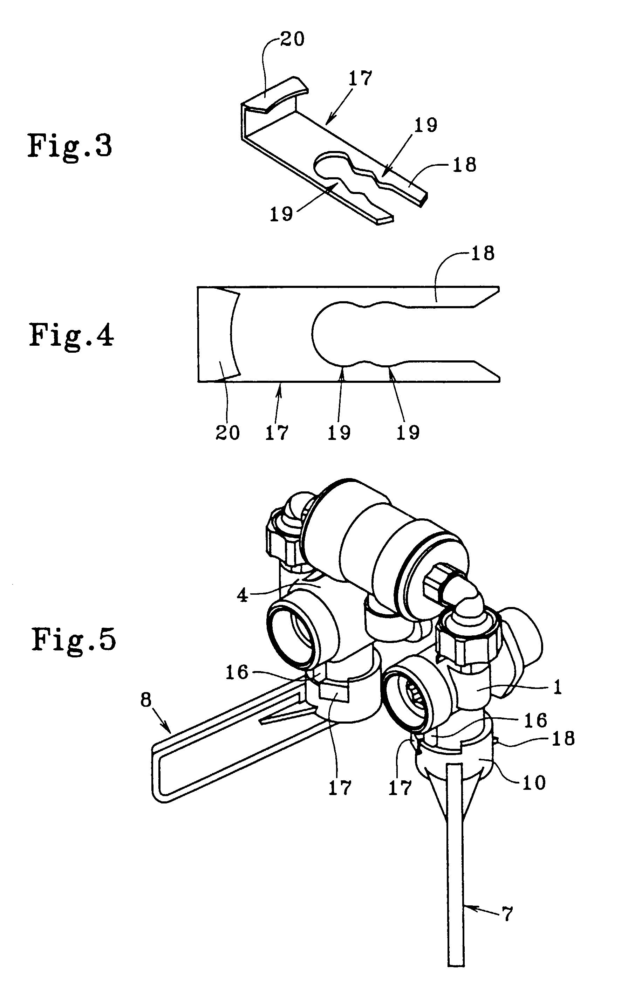

Quand les manettes 7 et 8 sont en place sur les pivots 11 des corps de robinet, leurs couronnes 10 sont maintenues sur l'axe de commande correspondant par un clip 17 représenté plus en détail aux figures 3 et 4. Le clip 17 se présente comme une lamelle allongée découpée en forme de fourche dont les branches 18 sont profilées intérieurement pour ménager sur chacune deux arrondis voisins 19. Du côté opposé la lamelle fait retour vers le haut et forme un rebord horizontal 20 dont l'extrémité est arrondie.

Les deux branches 18 du clip 17 pénètrent dans les fentes 14 et traversent ainsi de part en part la couronne 10. Les deux branches 18 ont enserré l'axe de commande qui s'est alors logé dans l'arrondi 19 le plus éloigné des extrémités de la fourche, lesquelles ressortent alors de la couronne comme on le voit sur la droite de la figure 1. Le clip étant ainsi enfoncé à fond, son rebord horizontal 20 se loge dans l'échancrure 13, et son arrondi s'applique sur le pivot 11. Le clip a donc une double fonction. D'une part il assure la fixation et le maintien de la manette autour de l'axe de commande. D'autre part il joue un rôle de pièce escamotable faisant office de butée franche du fait qu'il se place dans ladite échancrure pour limiter le débattement possible de la butée fixe et la course de la manette. En effet la largeur du rebord 20 étant déterminée pour couvrir une plage de 45° de l'échancrure 13, on comprend que chaque manette ne pourra avoir, quand le clip est enfoncé, qu'une possibilité de pivotement de 45°, correspondant au débattement possible de la butée 16 entre un épaulement 15 et le clip 17.

Pour assurer le remplissage en eau de l'installation comme illustré à la figure 5, les clips 17 sont enfoncés à fond. L'utilisateur actionne la manette 7 vers la droite et la manette 8 vers la gauche jusqu'à ce que le clip 17 se trouve en appui contre la butée 16. Les manettes ne peuvent donc aller au-delà de cette position de remplissage à 45°, et leur manoeuvre ainsi que leur positionnement en sont ainsi particulièrement simplifiés.

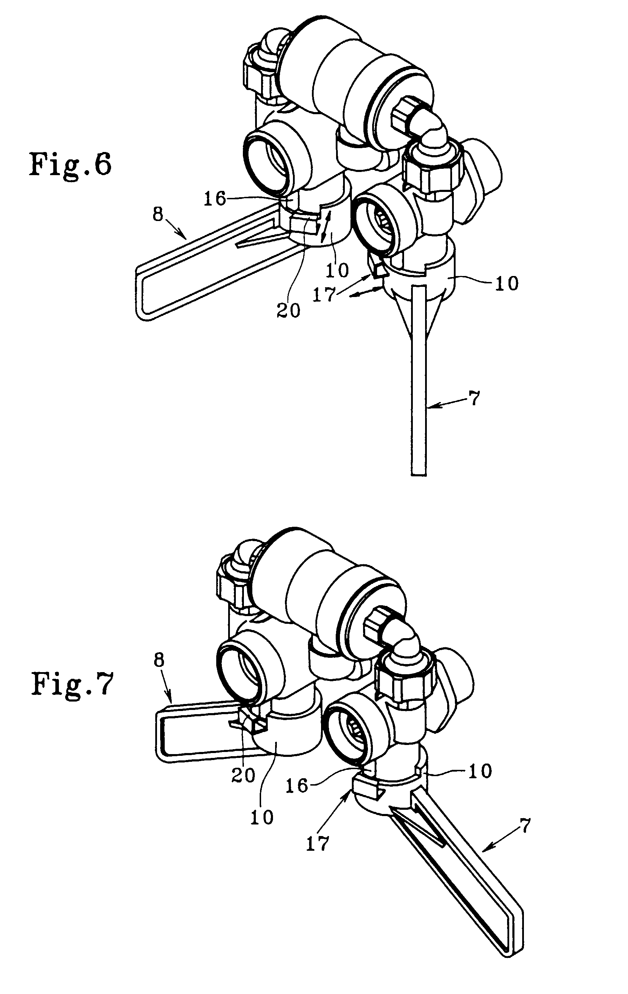

Si l'installateur ou l'usager souhaite fermer l'installation, c'est-à-dire couper la circulation d'eau, il tire sur chaque clip 17 jusqu'à ce que l'arrondi 19 le plus proche des extrémités de la fourche 18 (figure 4) vienne se positionner sur l'axe de commande. Le rebord 20 du clip s'est alors écarté de la couronne 10 de la manette comme le montre la figure 6.

A partir de cette position où la manette n'est plus bloquée en rotation et peut "franchir" la butée, l'utilisateur peut l'actionner à nouveau vers la droite pour la manette 7 et vers la gauche pour la manette 8, jusqu'à ce que l'épaulement 15 vienne en appui sur la butée 16. Chaque manette se trouve alors arrêtée à 90° de l'axe du robinet en position de fermeture, comme on le voit à la figure 7.

La réouverture des manettes se fait par une rotation inverse pour revenir à la position d'ouverture de la figure 1. Il suffira ensuite à l'usager de renfoncer le clip avant de tourner chaque manette, s'il veut assurer à nouveau un remplissage.

## Revendications

1. Manette à butée escamotable pour la robinetterie du dispositif de remplissage d'une chaudière à gaz comportant un levier d'actionnement (9) d'une couronne (10) coopérant avec l'axe de commande de l'organe obturateur du robinet, caractérisée en ce que ladite couronne (10) est creusée d'une échancrure (13) qui définit la limite angulaire du pivotement de la manette (7, 8) vis-à-vis d'une butée fixe (16) solidaire du corps de robinet (1, 4), et en ce qu'un clip escamotable (17) se place dans ladite échancrure pour limiter le débattement possible de la butée fixe et la course de la manette.

2. Manette selon la revendication 1, caractérisée en ce que le clip (17) est une lamelle allongée découpée en forme de fourche dont les branches (18) sont profilées intérieurement pour ménager sur chacune des arrondis (19), et en ce que du côté opposé, la lamelle fait retour vers le haut et forme un rebord horizontal (20).

3. Manette selon les revendications 1 et 2, caractérisée en ce que les branches (18) du clip (17) pénètrent dans des fentes (14) prévues sur la couronne (10) et enserrent l'axe de commande de l'organe obturateur par l'un des arrondis (19), tandis que le rebord horizontal (20) fait retour au-dessus de l'échancrure (13).

4. Manette selon les revendications 1 et 3, caractérisée en ce que l'échancrure (13) est creusée dans la couronne (10) selon un secteur de 90° et en ce que la largeur du rebord (20) du clip (17) couvre une plage de 45° de l'échancrure (13), pour limiter, quand le clip est enfoncé, le débattement de la manette à 45°.

## Patentansprüche

1. Griff mit einsteckbarem Anschlag für die Armaturen einer Vorrichtung zum Füllen von gasbetriebenen Wasserheizkesseln, der einen Hebel (9) zur Betätigung eines Kranzes (10) aufweist, der mit der Antriebsachse des Verschlußelementes des Wasserventils zusammenwirkt, dadurch gekennzeichnet, daß dieser Kranz (10) eine Ausschneidung (13) aufweist, die die maximalen Schwenkwinkel des Griffes (7, 8) relativ zu einem festen Anschlag (16) definiert, der einstückig mit dem Wasserhahn ausgebildet ist, und daß ein einsteckbarer Clip (17) in dieser Ausschneidung angeordnet ist, um den mögliche Schwenkweg des festen Anschlages und den Schwenkweg des Griffes zu begrenzen.

2. Griff nach Anspruch 1, dadurch gekennzeichnet, daß der Clip (17) als längliche Lamelle ausgebildet ist, die wie eine Gabel ausgeschnitten ist, deren Zinken (18) an ihrer Innenseite ein Profil aufweisen, um an jedem Zinken Abrundungen (19) bereitzustellen, und daß auf der entgegengesetzten Seite die Lamelle nach oben zurückgebogen ist und eine horizontale Randleiste (20) bildet.

3. Griff nach Anspruch 1 und 2, dadurch gekennzeichnet, daß die Zinken (18) des Clips (17) in Spalten (14) eindringen, die in dem Kranz (10) vorgesehen sind, und die Antriebsachse des Verschlußelementes mit einer der Abrundungen (19) umgreifen, während die horizontale Randleiste (20) über die Ausschneidung (13) greift.

4. Griff nach Anspruch 1 und 3, dadurch gekennzeichnet, daß die Ausschneidung (13) in dem Kranz (10) als Sektor von 90° ausgebildet ist und daß die Breite der Randleiste (20) des Clips (17) einen Bereich von 45° der Ausschneidung (13) bedeckt, um, wenn der Clip eingesteckt ist, den Ausschlag des Griffes auf 45° zu begrenzen.

## Claims

1. Lever with retractable stop for the valve fittings of the filling device of a gas boiler comprising a lever (9) for actuating a collar (10) co-operating with the control pin of the closing component of the valve, characterised in that said collar (10) is provided with a cut-out part (13) which defines the angular limit of pivoting of the lever (7, 8) in relation to a fixed stop (16) integral with valve body (1, 4), and in that a retractable clip (17) is placed in said cut-out part to limit the possible movement of the fixed stop and the travel of the lever.

2. Lever according to claim 1, characterised in that the clip (17) is an elongate strip cut to the shape of a fork the legs (18) of which are internally profiled to provide rounded portions (19) on each of them, and in that, on the opposite side, the strip turns upwards and forms a horizontal shoulder (20).

3. Lever according to claims 1 and 2, characterised in that the legs (18) of the clip (17) penetrate slots (14) provided on the collar (10) and clasp the control pin of the closing component with one of the rounded portions (19), while the horizontal shoulder (20) turns back over the cut-out portion (13).

4. Lever according to claims 1 and 3, characterised in that the cut-out portion (13) is provided in the collar (10) to form a sector of 90° and in that the width of the shoulder (20) of the clip (17) covers a range of 45° of the cut-out portion (13) to limit, when the clip is inserted, the travel of the lever to 45°.
